# EUROPÄISCHE PATENTSCHRIFT

(11) **EP 1 769 944 B1**
(45) Veröffentlichungstag und Bekanntmachung des Hinweises auf die Patenterteilung: **14.01.2009**
(21) Anmeldenummer: 06120361.8
(22) Anmeldetag: 08.09.2006
(51) Int. Cl.: B60C 9/18, B60C 11/00

(54) **Fahrzeugluftreifen und Verfahren zum Herstellen eines Fahrzeugluftreifens**
Pneumatic tire for vehicles and manufacturing process thereof
Pneumatique pour véhicule et procédé de fabrication dudit pneumatique

(30) Priorität: 01.10.2005 DE 102005047223
(43) Veröffentlichungstag der Anmeldung: 04.04.2007
(73) Patentinhaber: Continental Aktiengesellschaft, 30165 Hannover (DE)
(72) Erfinder: Winkler, Jens, Dr., 30900, Wedemark (DE); Geffert, Ulrich, 31848, Bad Münder (DE); Mauruschat, Rainer, 30826, Garbsen (DE); Seevers, Jörn, 31303, Burgdorf (DE)

(56) Entgegenhaltungen:
- EP-A1- 0 319 588

## Beschreibung

Die Erfindung betrifft einen Fahrzeugluftreifen mit einem Laufstreifen, einer Radialkarkasse, Wulstkernen mit Kernprofilen, Seitenwänden, einem insbesondere zweilagigen Gürtel und einer die radial äußerste Gürtellage abdeckenden, spiralig gewickelten Gürtelbandage mit im Wesentlichen in Umfangsrichtung und zueinander parallel verlaufenden Festigkeitsträgern.

Die Erfindung betrifft ferner ein Verfahren zum Herstellen eines Fahrzeugluftreifens mit einem Laufstreifen, einer Radialkarkasse, Wulstkernen mit Kernprofilen, Seitenwänden, einem insbesondere zweilagigen Gürtel und einer die radial äußerste Gürtellage abdeckenden, spiralförmig gewickelten Gürtelbandage mit im Wesentlichen in Umfangsrichtung und zueinander parallel verlaufenden Festigkeitsträgern, wobei der fertig aufgebaute Rohreifen in einer Vulkanisationsform unter Innendruck eingeformt und vulkanisiert wird, wodurch die Kontur des Reifens im Laufstreifen und im Gürtelbereich über die Breite dieser Bauteile einheitlich leicht gerundet wird.

Aus der EP 0 319 588 B1 sind ein Verfahren und eine Vorrichtung zur Herstellung eines Radialreifens bekannt, bei dem auf die äußere Oberfläche des aufgebauten Gürtels kontinuierlich und spiralig in Umfangsrichtung entweder ein organischer Faserkord oder mehrere organische Faserkorde gewickelt wird bzw. werden, um eine Bandage zur Verstärkung des Gürtel zu bilden. Dabei wird bei einer möglichen Ausführung die Spannung, die an den organischen Faserkord angelegt wird, geändert, um ein Minimum im Zenitbereich des Reifens und ein Maximum an den Schulterbereichen des Reifens zu erhalten. Wird eine derartige Bandage mit konstanter Wickelspannung und gleichbleibender Windungslänge pro Umfangswicklung auf den während des Wicklungsprozesses noch zylindrisch geformten Gürtel aufgebracht, so ist bei fertigem Reifen die Dehnung der Festigkeitsträger im Bandagenband im Zenitbereich des Reifens größer, in den Schulterbereichen kleiner. Dies ist insbesondere darauf zurückzuführen, dass die Bandage genauso wie der Gürtel im Allgemeinen auf einer zylindrischen Aufbautrommel aufgebaut und der Reifen schlussendlich in seiner fertigen und vulkanisierten Gestalt nicht mehr zylindrisch ist. Bei einer in diesem europäischen Patent offenbarten alternativen Lösung wird vorgeschlagen, die Gürtelaufbautrommel nicht zylindrisch zu gestalten, sondern von ihrer Kontur her so auszulegen, dass der Gürtel bereits gemäß seiner Kontur im fertigen Reifen erstellt werden kann.

Die sich in Abhängigkeit von der Rotationsgeschwindigkeit und dem Aufbau des Reifens unter den auf ihn wirkenden Zentrifugalkräften einstellende dynamische Kontur ist üblicherweise im Durchmesser um etwa 20 mm größer als die Kontur bei ruhendem Reifen, wobei das dynamische Wachstum im Laufstreifenmittelbereich größer ist als in den Seitenbereichen. Bei herkömmlich aufgebauten Reifen ist das dynamische Wachstum des Reifens unter Last mit einer deutlichen Verringerung der Breite der Bodenaufstandsfläche verbunden. Dadurch nimmt die axiale Steifigkeit des Reifens ab. Für Handling, Abrieb und das Bremsverhalten wäre es von Vorteil, wenn sich die Bodenaufstandsfläche während des dynamischen Wachstums des Reifens möglichst wenig verschmälert.

Der Erfindung liegt die Aufgabe zugrunde, einen Reifen zur Verfügung zu stellen, bei dem sich bei hohen Geschwindigkeiten die Breite der Bodenaufstandsfläche nur wenig vermindert.

Der Erfindung liegt auch die Aufgabe zugrunde, einen Reifen der eingangs genannten Art derart herzustellen, dass das dynamische Wachstum bei hohen Geschwindigkeiten nur geringen Einfluss auf die Breite in der Bodenaufstandfläche nimmt.

Ein erfindungsgemäß ausgeführter Reifen ist dadurch gekennzeichnet, dass sich die Querschnittskontur des Laufstreifens bei dynamischem Wachstum des Reifens über die Reifenbreite derart ändert, dass die Einhüllende des Laufstreifens örtlich zumindest eine in Umfangsrichtung umlaufende Erhebung oder Vertiefung aufweist.

Bei erfindungsgemäßen Reifen kann infolge ihres besonderen dynamischen Wachstums die Bodenaufstandsfläche auch bei hoher Geschwindigkeit vergleichsweise breit bleiben. Der Reifen ist daher im Handling, im Abrieb und im Bremsverhalten gegenüber Reifen mit einem herkömmlichen dynamischen Wachstum deutlich verbessert.

Hergestellt wird der Reifen erfindungsgemäß derart, dass während des Reifenaufbaus die Gürtellagen eine Kontur erhalten, die im Querschnitt zumindest eine örtliche Erhebung oder Vertiefung aufweist, und dass die Bandage auf den derart konturierten Gürtel aufgebracht wird, der Reifen fertig aufgebaut und vulkanisiert wird.

Der Rohreifen mit einer besonderen Gürtelkontur unterliegt daher beim Einformen in die Vulkanisationsform im Gürtel- und Bandagenbereich unterschiedlichen Spannungen. Im Bereich einer Vertiefung wird die Bandage während des Einformens und der stattfindenden Resterhebung stärker vorgespannt, im Bereich einer Erhebung wird die Bandage deutlich weniger vorgespannt. Der fertige Reifen zeigt daher über seine Breite und seinen Umfang ein selektives Wachstum, welches derart eingestellt werden kann, dass die Bodenaufstandsfläche auch bei hohen Geschwindigkeiten wesentlich weniger an Breite verliert als herkömmliche Reifen.

Bei einem erfindungsgemäß ausgeführten Reifen besteht die sich bei dynamischem Wachstum einstellende Querschnittskontur der Einhüllenden des Laufstreifens vorzugsweise aus zumindest einer Vertiefung und zwei seitlich anschließenden Erhebungen, wobei die Vertiefung kontinuierlich in die beiden Erhebungen übergeht. Diese dynamische Kontur nimmt unmittelbar Einfluss auf die Form und Größe der Bodenaufstandsfläche sowie auf die Druckverteilung in der Bodenaufstandsfläche und wirkt sich daher unmittelbar auf eine Anzahl von Reifeneigenschaften aus.

Von Vorteil ist es, wenn sich bei dynamischem Wachstum des Reifens im zentralen Bereich des Laufstreifens vorerst bei zunehmender Geschwindigkeit eine Vertiefung einstellt, wobei bei einer sehr hohen Geschwindigkeit diese Vertiefung in Folge des dynamischen Wachstums des Reifens wieder verschwindet.

Das dynamische Wachstum des Reifens kann vorteilhafter Weise auf die hauptsächlichen Profilstrukturen, beispielsweise Laufstreifenbänder und breite Umfangsnuten, angepasst werden. Dabei ist es günstig, wenn sich eine bei dynamischem Wachstum zumindest vorerst einstellende Erhebung in der Querschnittskontur der Einhüllenden des Laufstreifens im Bereich eines in Umfangsrichtung umlaufenden Profilpositivbandes befindet.

Im Bereich einer sich bei dynamischem Wachstum zumindest vorerst einstellenden Vertiefung ist die den Gürtel abdeckenden Bandage am stärksten vorgespannt.

Bei erfindungsgemäß ausgeführten Reifen kommen bei hohen Fahrzeuggeschwindigkeiten Laufstreifenbereiche mit dem Untergrund im Kontakt, die bei üblichen Reifen nicht mehr oder nicht im gleichen Ausmaß mit dem Untergrund in Kontakt kommen. Dadurch kann bei erfindungsgemäßen Reifen gezielt Einfluss auf bestimmte Reifeneigenschaften genommen werden, einerseits durch den Einsatz unterschiedlicher Gummimischungen im Laufstreifen und andererseits durch die Auslegung des Laufstreifenprofils. Der Laufstreifen wird daher insbesondere derart ausgeführt, dass er aus zumindest zwei in Umfangsrichtung umlaufenden Bereichen besteht, die aus unterschiedlichen Gummimischungen bestehen und/oder unterschiedliche Profilstrukturen aufweisen.

Erfindungsgemäße Reifen werden auf besonders konturierten Gürteltrommeln hergestellt. Die Gürtellagen werden dabei mit einer Kontur versehen, die im Querschnitt aus zumindest einer Vertiefung und zwei seitlich an diese anschließenden Erhebungen besteht. Dies kann beispielsweise auf einer entsprechend konturierten Gürteltrommel erfolgen.

Auf die konturierten Gürtellagen wird anschließend die Bandage entweder mit einer über die Gürtelbreite konstanten Aufzugsspannung oder mit einer variierenden Aufzugsspannung aufgebracht. So kann beispielsweise die Spannung im Bereich einer Vertiefung erhöht werden. Durch derartige Maßnahmen kann die Ausbildung von Erhebungen und Vertiefungen in der dynamischen Kontur des fertigen Reifens entsprechend beeinflusst werden. Dabei kann alternativ oder zusätzlich die Wicklungsdichte der Bandage über die Gürtelbreite variiert werden und es kann insbesondere die Wicklungsdichte im Bereich einer Vertiefung größer gewählt werden als im Bereich einer Erhebung.

Weitere Merkmale, Vorteile und Einzelheiten der Erfindung werden nun an Hand der Zeichnung, die Ausführungsbeispiele darstellt, näher beschrieben. Dabei zeigen
Fig. 1 schematisch einen Querschnitt durch die eine Hälfte eines Fahrzeugluftreifens,
Fig. 2 Konturen zur Verdeutlichung einer Ausführungsform der Erfindung und
Fig. 3 Konturen zur Verdeutlichung einer weiteren Ausführungsform der Erfindung.

Vorab wird darauf verwiesen, dass unter dem Begriff "Geschwindigkeit" die Fahrzeuggeschwindigkeit (Fahrzeug mit erfindungsgemäß ausgeführten Reifen) zu verstehen ist.

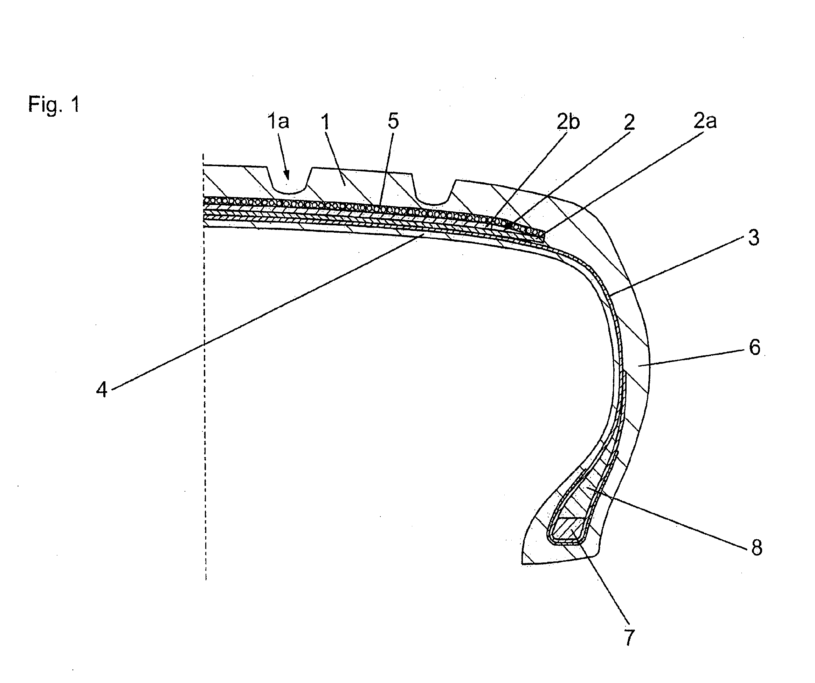

Fig. 1 zeigt einen Fahrzeugluftreifen für Personenkraftwagen, mit einem profilierten Laufstreifen 1, einem hier aus zwei Lagen 2a, 2b bestehenden Gürtel 2, einer im dargestellten Ausführungsbeispiel einlagig ausgeführte Radialkarkasse 3, einer luftdicht ausgeführten Innenschicht 4, zwei Seitenwänden 6 sowie mit Wulstbereichen mit Wulstkernen 7 und Kernprofilen 8. Die beiden Gürtellagen 2a, 2b bestehen üblicherweise aus in eine Gummimischung eingebetteten in jeder Lage parallel zueinander verlaufenden Festigkeitsträgern, insbesondere Stahlkorden, wobei die Festigkeitsträger in diesen beiden Gürtellagen 2a, 2b einander kreuzen, wobei die in jeder Lage parallel zueinander verlaufenden Stahlkorde mit der Umfangsrichtung des Reifens einen spitzen Winkel in der Größenordnung von 15 bis 40° einschließen. Die Profilierung des Laufstreifen 1 ist durch Umfangsrillen 1a angedeutet, welche in Umfangsrichtung umlaufende Profilpositive 1b, welche Blockreihen oder Laufstreifenbänder sein können, voneinander trennen.

Der Gürtel 2 ist mit einer Bandage 5 abgedeckt, welche, wie es üblich ist, als Spulbandage ausgeführt ist. Die Bandage 5 wird daher aus einem oder mehreren Bandagestreifen erstellt, welche bzw. welcher jeweils aus in eine Gummimischung eingebetteten, in Längsrichtung des Streifens verlaufenden, textilen oder metallischen Festigkeitsträgern besteht bzw. bestehen und um den Gürtel 2 gewickelt sind bzw. ist. Ein Bandagestreifen kann 7 bis 12 Fäden pro cm Streifenbreite aufweisen, seine Breite beträgt üblicherweise 5 mm bis 15 mm.

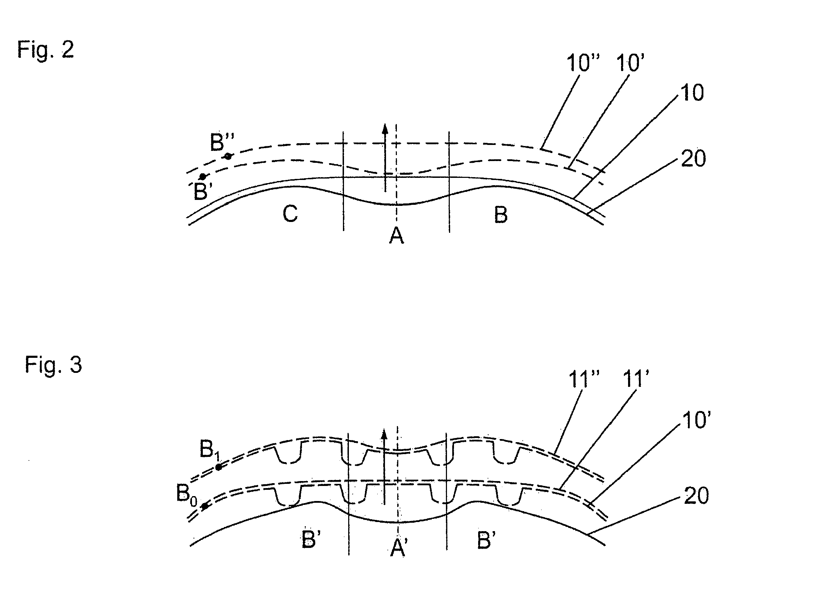

Fig. 2 zeigt verschiedene Konturen im Querschnitt. Mit 20 ist die Außenkontur des Gürtelverbandes - Gürtellagen und Bandage - im Rohreifen bzw. fertig zum Einbau beim Aufbau des Rohreifens bezeichnet. Oberhalb der Kontur 20 ist die Kontur 10 der Einhüllenden des Laufstreifens 1 des fertigen Reifens, in Ruhe oder bei geringer Rotationsgeschwindigkeit, dargestellt. Oberhalb der Kontur 10 sind zwei Konturen 10' und 10" von Einhüllenden des Laufstreifens 1 gezeigt, die sich durch das Wachstum des Reifens bei Rotation mit größer werdenden Geschwindigkeiten einstellen, die Kontur 10' bei einer Geschwindigkeit v₁ die Kontur 10" bei einer Geschwindigkeit v₂ größer als v₁. Das dynamische Wachstum und die daraus resultierenden dynamischen Konturen entstehen unter der auf den Reifen bei Rotation wirkenden Fliehkraft. Die dynamische Kontur eines Reifens kann auf einem Prüfstand, auf welchem der auf die Felge aufgezogene und unter Innendruck gesetzte Reifen in Rotation versetzt wird, ermittelt werden. Die jeweilige dynamische Kontur bei einer bestimmten Geschwindigkeit kann durch Abtasten der Außenfläche des Reifens, beispielsweise mittels eines Lasers, festgestellt, in einem geeigneten Rechnerprogramm abgespeichert und ausgewertet werden. Die Außenkontur 10' des Reifens im Bereich des Laufstreifens stellt sich beispielsweise bei einer Geschwindigkeit von etwa 80 km/h und die Außenkontur 10" bei einer Geschwindigkeit von ca. 120 km/h ein. Die Punkte B' und B" verdeutlichen den einen seitlichen Rand der Bodenaufstandsfläche. Bei einem erfindungsgemäßen Reifen ist somit die Verminderung der Breite der Bodenaufstandsfläche des Reifens mit zunehmender Geschwindigkeit wesentlich geringer als bei herkömmlich hergestellten Reifen.

Der Rohreifen weist im Gürtel- und Laufstreifenbereich eine besondere Kontur auf. Die Außenkontur 20 des Gürtelverbandes entspricht auch der Außenkontur des Rohreifens nach Aufbringen des Laufstreifens 1. Die Kontur 20 setzt sich, bezogen auf die radiale Erstreckung des Reifens, aus zwei seitlichen Erhebungen C, B und einer mittigen, zentralen Vertiefung A zusammen, die fließend ineinander übergehen und über den Umfang verlaufen. Werden die Erhebungen C, B und die Vertiefung A im Querschnitt als geometrische Kurven betrachtet, so definieren die beiden Wendepunkte die Grenzen zwischen der Vertiefung A und den seitlichen Erhebungen C, B. Die Außenflanken der beiden Erhebungen C, B gehen fließend in die Schulterbereiche des Reifens über bzw. sind zum Teil Bestandteile der Schulterbereiche. Die zentrale Vertiefung C nimmt zwischen 30 und 50 % jener Breite ein, welche im Wesentlichen der Breite der Bodenaufstandsfläche des fertigen Reifens unter Nenndruck und Nennlast entspricht. Bei der dargestellten Ausführungsvariante ist die Kontur 20 symmetrisch zur Äquatorebene des Reifens ausgeführt, die Breite jeder Erhebung C, B beträgt daher zwischen 25 und 35 % der Breite der Bodenaufstandsfläche des fertigen Reifens. Die Kontur 20 kann auch derart ausgelegt sein, dass eine der beiden seitlichen Erhebungen C, B über einen größeren Bereich dieser Breite verläuft als die andere. Durch diese Maßnahme kann beispielsweise bei einem Reifen, der einen definierten Innenbereich aufweist, der demnach bei am Fahrzeug montiertem Reifen der Fahrzeuglängsachse zugekehrt ist, eine gezielte Beeinflussung bestimmter Reifeneigenschaften erfolgen.

Ein derart konturierter Gürtel kann gemäß dem in einer deutschen Patentanmeldung des Anmelders beschriebenen Verfahren und mit der dort beschriebenen Vorrichtung hergestellt werden. Dabei werden die Gürtellagen 2a, 2b zunächst auf einer expaniderbaren, zylindrischen Gürteltrommel zylindrisch aufgebaut und gespleißt und anschließend auf eine zweite, außenseitig entsprechend konturiert ausgeführte Gürteltrommel (s. Kontur 20 in Fig. 2) transferiert und hier beispielsweise durch örtliche Dehnung und Stauchung konturiert. Die Verformung der Gürtellagen 2a, 2b kann durch eine von außen auf die Gürtellagen 2a, 2b wirkende Einrichtung erfolgen, die beispielsweise eine mit Luft befüllbare Manschette aufweist, deren den Gürtellagen 2a, 2b zugewandte Seite im aufgeblähten Zustand die erwünschte Außenkontur annimmt. Anschließend wird auf den Gürtel 2 die Bandage 5 durch spiraliges Wickeln eines Bandagestreifens aufgebracht. Die Bandage 5 kann dabei über die Reifenbreite mit konstanter oder variierender Aufzugsspannung erstellt werden. So kann beispielsweise im Bereich der Erhebungen die Spuldichte und/oder die Aufzugsspannung erhöht werden.

Der im Gürtel- und im Laufstreifenbereich mit dieser speziellen Kontur gefertigte Rohreifen wird in einer herkömmlichen Vulkanisationsform, die dem fertigen Reifen im Laufstreifen eine Einhüllende mit einer einheitlich leicht abgerundeten Kontur vermittelt, vulkanisiert. Dabei wird der Reifen von innen her über einen mit Heizmedium befüllten Balg unter Druck in die Segmente der Vulkanisationsform gepresst und eingeformt. Gleichzeitig verformt sich dabei der Reifen derart, dass die geschwungene Kontur des Gürtels, der Bandage und des Laufstreifens in die erwähnte durch die Formsegmente vorgegebene Kontur überführt wird und es findet die sogenannte Resterhebung statt, der Reifen wird unter Ausdehnung in die das Profil eingeprägenden Segmente eingehoben bzw. eingepresst. Im zentralen Bereich A findet dabei eine wesentlich höhere Vorspannung der Bandage 5 statt als in den beiden seitlichen Bereichen C, B, die weniger stark vorgespannt werden.

Fig. 3 verdeutlicht eine Ausführungsform, bei welcher der Gürtel 2 derart gefertigt wird, dass seine Kontur an das spätere Reifenprofil angepasst ist. Oberhalb der Gürtelkontur 20, welche auch der Kontur des unprofilierten Laufstreifens im Rohreifen entspricht, ist strichliert die Querschnittskontur 10' des Laufstreifens des in Fig. 1 gezeigten fertigen Reifens, sowie die Querschnittskontur 11' seiner Einhüllenden dargestellt. Im Bereich des entlang des Reifenäquators umlaufenden Profilpositivbandes, dieses kann beispielsweise eine Blockreihe sein, ist die Gürtelkontur 20 mit einer Vertiefung A' versehen. Zu den in den beiden Laufstreifenhälften symmetrisch zur Äquatorebene angeordneten Profilpositivbändern, beispielsweise ebenfalls Blockreihen, ist die Gürtelkontur 20 mit Erhebungen B', ausgeführt worden. Wie bereits erwähnt verschwinden die Erhebungen und die Vertiefungen bei der Vulkanisation des Reifens in einer auf herkömmliche Weise eine kontinuierlich gerundete Kontur vermittelnden Vulkanisationsform durch das Einformen bzw. die Resterhebung. Dabei wird der Bereich der Vertiefung A' einer stärkeren Vorspannung unterzogen als die Bereiche mit Erhebungen B'. Jene in Umfangsrichtung umlaufenden Profilpositivbänder, welchen im ursprünglich konturierten Gürtel die Erhebungen B' zugeordnet sind, unterliegen daher einem größeren dynamischen Wachstum bei hohen Geschwindigkeiten als jenes Profilpositivband, welches der ursprünglichen Vertiefung A' zugeordnet ist. Dies entspricht einem gezielten Wachstum von einzelnen ausgewählten umlaufenden Profilpositivbändern bestimmter Breite bei hohen Geschwindigkeiten, andere umlaufende Profilpositivbänder können quasi versteckt werden. Mit 11" ist die Querschnittskontur der Einhüllenden des Laufstreifens bei einer Geschwindigkeit v₁, (Fahrzeuggeschwindigkeit), die beispielsweise 120 km/h ist, bezeichnet. Dabei ist unterhalb der Kontur 11" der Querschnittsverlauf der Profilstrukturen zu sehen. B₀ kennzeichnet den einen Rand der Bodenaufstandsfläche bei ruhendem Reifen oder bei geringer Rotationsgeschwindigkeit, B₁ die Lage des Randes bei einer Geschwindigkeit v₁.

Die Herstellung des Reifens ist auf die bereits oben beschriebene Weise möglich. Auf den konturierten Gürtel kann die Bandage 5 mit einer konstanten Spulspannung aufgebracht werden. Es ist jedoch auch möglich, die Spulspannung gezielt zu variieren, beispielsweise eine höhere Spulspannung im Bereich jener umlaufenden Profilpositivbänder einzusetzen, welche keinen Erhebungen in der Kontur des Gürtel zugeordnet sind. Alternativ dazu kann in diesen oder anderen Abschnitten eine höhere Spuldichte, beispielsweise durch das Aufbringen mehrerer Lagen Bandagenmaterial oder durch eine überlappende Wicklung, gewählt werden. Darüber hinaus ist es möglich, gezielt und abschnittsweise ein Bandagenmaterial mit hochmoduligen Festigkeitsträgern, beispielweise aus Stahl, zu verwenden.

Die Erfindung ist auf die dargestellten Ausführungsbeispiele nicht eingeschränkt. So ist es beispielsweise möglich, anstelle von Bandagestreifen einen oder mehrere gummierte Einzelkorde zu verwenden, welcher bzw. welche kontinuierlich und spiralig in Umfangsrichtung um den Gürtel gewickelt wird bzw. werden.

Des weiteren kann über im Laufstreifen eingesetzte Gummimischungen und die Laufstreifenprofilierung auf bestimmte Eigenschaften des Reifens bei zunehmender Geschwindigkeit Einfluss genommen werden. Der Laufstreifen kann aus zumindest zwei Umfangsbereichen gleicher oder unterschiedlicher Breite bestehen, welche aus unterschiedlichen Gummimischungen hergestellt sind. So kann beispielsweise der Innenbereich des Laufstreifens aus einer Mischung mit geringem Wärmeaufbau oder aus einer abriebbeständige Mischung bestehen. Im Außenbereich kann eine Gummimischung eingesetzt werden, die das Bremsverhalten auf nassem Untergrund positiv beeinflusst. Der Laufstreifen kann ferner aus zumindest zwei Umfangsbereichen mit unterschiedlichen Profilstrukturen bestehen. Die Profilstrukturen des Laufstreifens im Außenbereich können derart ausgeführt sein, dass ein besonders gutes Wasserableitvermögen zur Außenseite sichergestellt ist. Ein erfindungsgemäßer Reifen kann daher derart ausgelegt werden, dass er besonders für hohe Geschwindigkeiten unter nassen Fahrbedingungen geeignet ist.

## Patentansprüche

1. Fahrzeugluftreifen mit einem Laufstreifen (1), einer Radialkarkasse (3), Wulstkernen (7) mit Kernprofilen (8), Seitenwänden (6), einem insbesondere zweilagigen Gürtel (2) und einer die radial äußerste Gürtellage (2b) abdeckenden, spiralig gewickelten Gürtelbandage (5) mit im Wesentlichen in Umfangsrichtung und zueinander parallel verlaufenden Festigkeitsträgern,
**dadurch gekennzeichnet,**
**dass** sich die Querschnittskontur des Laufstreifens (1) bei dynamischem Wachstum des Reifens über die Reifenbreite derart ändert, dass die Einhüllende des Laufstreifens (1) örtlich zumindest eine in Umfangsrichtung umlaufende Erhebung oder Vertiefung aufweist.

2. Fahrzeugluftreifen nach Anspruch 1, **dadurch gekennzeichnet, dass** die sich bei dynamischem Wachstum einstellende Querschnittskontur der Einhüllenden des Laufstreifens (1) aus zumindest einer Vertiefung und zwei seitlich anschließenden Erhebungen besteht, welche kontinuierlich in einander übergehen.

3. Fahrzeugluftreifen nach Anspruch 1 oder 2, **dadurch gekennzeichnet, dass** sich bei dynamischem Wachstum des Reifens im zentralen Bereich des Laufstreifens (1) vorerst eine Vertiefung einstellt.

4. Fahrzeugluftreifen nach eine der Ansprüche 1 bis 3, **dadurch gekennzeichnet, dass** sich eine bei dynamischem Wachstum des Reifens zumindest eine sich vorerst einstellende Erhebung in der Querschnittskontur der Einhüllenden des Laufstreifens (1) im Bereich eines in Umfangsrichtung umlaufenden Profilpositivbandes befindet.

5. Fahrzeugluftreifen nach einem der Ansprüche 1 bis 4, **dadurch gekennzeichnet, dass** die Bandage (5) im Bereich einer sich bei dynamischem Wachstum einstellenden Vertiefung am stärksten vorgespannt ist.

6. Fahrzeugluftreifen nach einem der Ansprüche 1 bis 5, **dadurch gekennzeichnet, dass** der Laufstreifen (1) aus zumindest zwei in Umfangsrichtung umlaufenden Bereichen aus unterschiedlichen Gummimischungen besteht.

7. Fahrzeugluftreifen nach einem der Ansprüche 1 bis 6, **dadurch gekennzeichnet, dass** der Laufstreifen (1) aus zumindest zwei in Umfangsrichtung umlaufenden Bereichen mit unterschiedlichen Profilstrukturen besteht.

8. Verfahren zum Herstellen eines Fahrzugluftreifens mit einem Laufstreifen (1), einer Radialkarkasse (3), Wulstkernen (7) mit Kernprofilen (8), Seitenwänden (6), einem insbesondere zweilagigen Gürtel (2) und einer die radial äußerste Gürtellage (2b) abdeckenden, spiralförmig gewickelten Gürtelbandage (5) mit im Wesentlichen in Umfangsrichtung und zueinander parallel verlaufenden Festigkeitsträgern, wobei der fertig aufgebaute Rohreifen in einer Vulkanisationsform unter Innendruck eingeformt und vulkanisiert wird, wodurch die Kontur des Reifens im Laufstreifen (1) und im Gürtelbereich (2) über die Breite dieser Bauteile einheitlich leicht gerundet wird,
**dadurch gekennzeichnet,**
**dass** während des Reifenaufbaus die Gürtellagen (2a, 2b) eine Kontur erhalten, die im Querschnitt zumindest eine örtliche Erhebung oder Vertiefung aufweist, und dass die Bandage (5) auf den derart konturierten Gürtel (2) aufgebracht wird, der Reifen fertig aufgebaut und vulkanisiert wird.

9. Verfahren nach Anspruch 8, **dadurch gekennzeichnet, dass** die Gürtellagen (2a, 2b) eine Kontur erhalten, die im Querschnitt aus zumindest einer Vertiefung (A, A') und zwei seitlich an diese anschließenden Erhebungen (B, C, B') besteht.

10. Verfahren nach Anspruch 8 oder 9, **dadurch gekennzeichnet, dass** die Bandage (5) auf die konturierten Gürtellagen (2a, 2b) mit einer über die Gürtelbreite konstanten Spannung aufgebracht wird.

11. Verfahren nach Anspruch 9 oder 10, **dadurch gekennzeichnet, dass** die Bandage (5) auf die konturierten Gürtellagen (2a, 2b) mit einer über die Gürtelbreite variierenden Spannung aufgebracht wird.

12. Verfahren nach Anspruch 11, **dadurch gekennzeichnet, dass** die Spannung im Bereich einer Vertiefung (A, A') erhöht wird.

13. Verfahren nach Anspruch 9 oder 10, **dadurch gekennzeichnet, dass** die Wicklungsdichte der Bandage (5) über die Gürtelbreite variiert wird.

14. Verfahren nach Anspruch 13, **dadurch gekennzeichnet, dass** die Wicklungsdichte im Bereich einer Vertiefung (A, A') größer ist als im Bereich einer Erhebung (B, C, B').

## Claims

1. Pneumatic vehicle tyre with a tread rubber (1), a radial carcass (3), bead cores (7) with bead fillers (8), sidewalls (6), a breaker belt (2), in particular comprising two plies, and a spirally wound belt bandage (5), which covers the radially outermost belt ply (2b) and has reinforcing elements running substantially in the circumferential direction and parallel to one another, **characterized in that**, as the tyre dynamically grows, the cross-sectional contour of the tread rubber (1) over the width of the tyre changes in such a way that the envelope of the tread rubber (1) locally has at least one elevation or depression running around in the circumferential direction.

2. Pneumatic vehicle tyre according to Claim 1, **characterized in that** the cross-sectional contour of the envelope of the tread rubber (1) obtained during dynamic growth comprises at least one depression and two laterally adjoining elevations, which merge continuously one into the other.

3. Pneumatic vehicle tyre according to Claim 1 or 2, **characterized in that**, as the tyre dynamically grows, first a depression is obtained in the central region of the tread rubber (1).

4. Pneumatic vehicle tyre according to one of Claims 1 to 3, **characterized in that**, as the tyre dynamically grows, at least one elevation obtained first in the cross-sectional contour of the envelope of the tread rubber (1) is located in the region of a strip of profile positives running around in the circumferential direction.

5. Pneumatic vehicle tyre according to one of Claims 1 to 4, **characterized in that** the bandage (5) is pretensioned most in the region of a depression obtained during dynamic growth.

6. Pneumatic vehicle tyre according to one of Claims 1 to 5, **characterized in that** the tread rubber (1) comprises at least two regions of different rubber compounds running around in the circumferential direction.

7. Pneumatic vehicle tyre according to one of Claims 1 to 6, **characterized in that** the tread rubber (1) comprises at least two regions with different profile structures running around in the circumferential direction.

8. Process for manufacturing a pneumatic vehicle tyre with a tread rubber (1), a radial carcass (3), bead cores (7) with bead fillers (8), sidewalls (6), a breaker belt (2), in particular comprising two plies, and a spirally wound belt bandage (5), which covers the radially outermost belt ply (2b) and has reinforcing elements running substantially in the circumferential direction and parallel to one another, the completely built green tyre being moulded into a vulcanizing mould under internal pressure and vulcanized, whereby the contour of the tyre in the tread rubber (1) and in the belt region (2) is slightly rounded uniformly over the width of these components, **characterized in that**, during the building of the tyre, the belt plies (2a, 2b) are given a contour which has in cross section at least one local elevation or depression, and **in that** the bandage (5) is applied to the breaker belt (2) contoured in this way, the building of the tyre is completed and the tyre is vulcanized.

9. Process according to Claim 8, **characterized in that** the belt plies (2a, 2b) are given a contour which comprises in cross section at least one depression (A, A') and two elevations (B, C, B') laterally adjoining thereto.

10. Process according to Claim 8 or 9, **characterized in that** the bandage (5) is applied to the contoured belt plies (2a, 2b) with a tension that is constant over the belt width.

11. Process according to Claim 9 or 10, **characterized in that** the bandage (5) is applied to the contoured belt plies (2a, 2b) with a tension that varies over the belt width.

12. Process according to Claim 11, **characterized in that** the tension is increased in the region of a depression (A, A').

13. Process according to Claim 9 or 10, **characterized in that** the winding density of the bandage (5) is varied over the belt width.

14. Process according to Claim 13, **characterized in that** the winding density is greater in the region of a depression (A, A') than in the region of an elevation (B, C, B').

## Revendications

1. Pneumatique pour véhicule, comprenant une bande de roulement (1), une carcasse radiale (3), des tringles de talon (7) avec des profils de tringle (8), des parois latérales (6), une armature (2), notamment à deux couches, et un bandage d'armature (5) enroulé en spirale et recouvrant la couche radialement extérieure (2b) de l'armature, avec des renforts s'étendant essentiellement dans la direction périphérique et parallèlement les uns aux autres,
**caractérisé en ce que**
le contour en section transversale de la bande de roulement (1), en cas de croissance dynamique du pneumatique sur la largeur du pneumatique, varie de telle sorte que l'extrémité d'enveloppement de la bande de roulement (1) présente localement au moins un rehaussement ou renfoncement circonférentiel dans la direction périphérique.

2. Pneumatique pour véhicule selon la revendication 1, **caractérisé en ce que** le contour en section transversale des extrémités d'enveloppement de la bande de roulement (1), qui s'établit en cas de croissance dynamique, se compose d'au moins un renfoncement et de deux rehaussements se raccordant latéralement, qui se prolongent en continu l'un dans l'autre.

3. Pneumatique pour véhicule selon la revendication 1 ou 2, **caractérisé en ce que** tout d'abord, un renfoncement s'établit lors de la croissance dynamique du pneumatique dans la région centrale de la bande de roulement (1).

4. Pneumatique pour véhicule selon l'une quelconque des revendications 1 à 3, **caractérisé en ce qu'**au moins un rehaussement s'établissant en premier en cas de croissance dynamique du pneumatique, dans le contour en section transversale des extrémités d'enveloppement de la bande de roulement (1), se trouve dans la région d'une bande de profil positive circonférentielle dans la direction périphérique.

5. Pneumatique pour véhicule selon l'une quelconque des revendications 1 à 4, **caractérisé en ce que** le bandage (5) est le plus précontraint dans la région d'un renfoncement s'établissant en cas de croissance dynamique.

6. Pneumatique pour véhicule selon l'une quelconque des revendications 1 à 5, **caractérisé en ce que** la bande de roulement (1) se compose d'au moins deux mélanges de caoutchouc différents dans des régions circonférentielles dans la direction périphérique.

7. Pneumatique pour véhicule selon l'une quelconque des revendications 1 à 6, **caractérisé en ce que** la bande de roulement (1) se compose d'au moins deux régions circonférentielles dans la direction périphérique, ayant des structures de profil différentes.

8. Procédé de fabrication d'un pneumatique pour véhicule comprenant une bande de roulement (1), une carcasse radiale (3), des tringles de talon (7) avec des profils de tringle (8), des parois latérales (6), une armature (2), notamment à deux couches, et un bandage d'armature (5) enroulé en spirale et recouvrant la couche radialement extérieure (2b) de l'armature, avec des renforts s'étendant essentiellement dans la direction périphérique et parallèlement les uns aux autres, le pneumatique brut fabriqué étant façonné et vulcanisé dans un moule de vulcanisation sous pression interne, de sorte que le contour du pneumatique dans la bande de roulement (1) et dans la région de l'armature (2) soit légèrement arrondi de manière unitaire sur la largeur de ces composants,
**caractérisé en ce que**
pendant la construction du pneumatique, les couches d'armature (2a, 2b) adoptent un contour qui présente en section transversale au moins un rehaussement ou renfoncement local, et **en ce que** le bandage (5) est appliqué sur l'armature (2) ainsi pourvue de ses contours, et le pneumatique est fabriqué et est vulcanisé.

9. Procédé selon la revendication 8, **caractérisé en ce que** les couches d'armature (2a, 2b) adoptent un contour qui, en section transversale, se compose d'au moins un renfoncement (A, A') et de deux rehaussements (B, C, B') s'y raccordant latéralement.

10. Procédé selon la revendication 8 ou 9, **caractérisé en ce que** le bandage (5) est appliqué sur les couches d'armature (2a, 2b) pourvues de leurs contours, avec une tension constante sur la largeur de l'armature.

11. Procédé selon la revendication 9 ou 10, **caractérisé en ce que** le bandage (5) est appliqué sur les couches d'armature (2a, 2b) pourvues de leurs contours, avec une tension variant sur la largeur de l'armature.

12. Procédé selon la revendication 11, **caractérisé en ce que** la tension est augmentée dans la région d'un renfoncement (A, A').

13. Procédé selon la revendication 9 ou 10, **caractérisé en ce que** la densité d'enroulement du bandage (5) varie sur la largeur de l'armature.

14. Procédé selon la revendication 13, **caractérisé en ce que** la densité d'enroulement dans la région d'un renfoncement (A, A') est plus grande que dans la région d'un rehaussement (B, C, B').
